# EUROPEAN PATENT APPLICATION

(11) **EP 4 841 410 A1**
(43) Date of publication of application: **18.11.2026**
(21) Application number: 26175283.6
(22) Date of filing: 29.04.2026
(51) Int. Cl.: G06F 3/04817, G06F 3/0482, G06F 3/0483, H04N 1/00

(54) **INFORMATION PROCESSING APPARATUS AND DISPLAY METHOD**

(30) Priority: 14.05.2025 JP 2025081466
(71) Applicant: Sharp Kabushiki Kaisha, Sakai City, Osaka 590-8522 (JP)
(72) Inventor: KAMIHISA, Sho, Sakai City, Osaka, 590-8522 (JP)
(74) Representative: Müller Hoffmann & Partner

(57) **Abstract**

An information processing apparatus of the present disclosure includes: a display portion (140) which arranges and displays, on a home screen, one or more buttons for executing a function; and one or more controllers. The one or more controllers display a setting screen for setting whether the function is to be enabled or disabled, on the display portion (140), and rearrange and display, when the function is set to disabled on the setting screen, buttons other than the button corresponding to the function set to disabled, on the home screen.

## Description

### BACKGROUND OF THE INVENTION

### Field of the Invention

The present disclosure relates to an information processing apparatus and the like. This application claims priority to Japanese Patent Application No. 2025-081466, filed in Japan on May 14, 2025, the contents of which are incorporated herein by reference.

### Description of the Background Art

For example, as indicated by a conventional technology, there is known an information processing apparatus which displays a setting information input screen to guide an input operation, receives an input operation for input of setting information, and saves, when the input of the setting information is completed and a save of the setting information is received, the setting information in a storage portion.

An object of the present disclosure is to provide an information processing apparatus and the like capable of displaying a user interface on which buttons are appropriately rearranged on the basis of a function selected by a user, for example.

### SUMMARY OF THE INVENTION

An information processing apparatus of the present disclosure includes: a display portion which arranges and displays, on a home screen, one or more buttons for executing a function; and one or more controllers, in which the one or more controllers display a setting screen for setting whether the function is to be enabled or disabled, on the display portion; and rearrange and display, when the function is set to disabled on the setting screen, buttons other than the button corresponding to the function set to disabled, on the home screen.

A display method of the present disclosure includes: a display step of arranging and displaying, on a home screen, one or more buttons for executing a function; and a control step of causing a setting screen for setting enablement and disablement of the function to be displayed in the display step, and rearranging and displaying, when the function is set to disabled on the setting screen, buttons other than the button corresponding to the function set to disabled, on the home screen.

According to the present disclosure, it is possible to provide an information processing apparatus and the like capable of displaying a user interface on which buttons are appropriately rearranged on the basis of a function selected by a user, for example.

### BRIEF DESCRIPTION OF THE DRAWINGS

FIG. 1 is a diagram illustrating an outline of an apparatus according to a first embodiment.
FIG. 2 is a diagram illustrating a hardware configuration of the apparatus according to the first embodiment.
FIG. 3A is a diagram illustrating a software configuration of the apparatus according to the first embodiment, and FIG. 3B is a diagram illustrating an example of system setting information in the first embodiment.
FIG. 4 is a diagram illustrating an example of default setting information in the first embodiment.
FIG. 5A is a diagram illustrating an example of a home screen according to the first embodiment, and FIG. 5B is a diagram illustrating an example of button arrangement setting information in the first embodiment.
FIG. 6 is a diagram illustrating a flow of processing according to the first embodiment.
FIGS. 7A to 7C are diagrams illustrating an example of operation in the first embodiment.
FIG. 8 is a diagram illustrating an example of operation in the first embodiment.
FIGS. 9A to 9D are diagrams illustrating an example of operation in the first embodiment.
FIGS. 10A to 10C are diagrams illustrating an example of operation in the first embodiment.
FIGS. 11A to 11D are diagrams illustrating an example of operation of a conventional home screen.
FIG. 12 is a diagram illustrating a flow of processing according to a second embodiment.
FIGS. 13A and 13B are diagrams illustrating an example of operation in the second embodiment.
FIG. 14 is a diagram illustrating a flow of processing according to a third embodiment.
FIG. 15 is a diagram illustrating a flow of processing according to a fourth embodiment.
FIG. 16 is a diagram illustrating a flow of processing according to a fifth embodiment.
FIG. 17 is a diagram illustrating an example of operation in the fifth embodiment.

### DESCRIPTION OF THE PREFERRED EMBODIMENTS

A home screen is known as a display screen which displays buttons corresponding to the functions of an information processing apparatus. The home screen is a user interface on which buttons are arranged at predetermined positions, and by which a function of the information processing apparatus can be executed when a user selects the arranged button by, for example, clicking or touching the button. An image forming apparatus is known as the information processing apparatus which displays such a home screen. The image forming apparatus displays icons (buttons) of various functions, such as a copy function, a facsimile function, and a scan function, on the home screen.

For example, in models in which a facsimile function needs to be added by option in order to use the facsimile function, e.g., a fax option model, in a case where the facsimile function is not mounted, a button related to only the facsimile function is treated as "not to be set (blank space)" as the button arrangement of the home screen. In this way, the image forming apparatus displays a home screen with existence of a blank space from after the initial installation and carries out the operation. In such a case, if the blank space needs to be filled, an administrator must make the setting, such as a home screen setting, to edit the arrangement of the buttons on the home screen. Thus, there arises a problem that the administrator is burdened with the trouble that he/she needs to make the setting of the button arrangement of the home screen and to register the setting of the button arrangement by shifting the buttons one by one in order to fill the blank space.

Further, also for a model in which the facsimile function can be used, e.g., a fax standard model, the facsimile function can be disabled by an initial installation wizard. Thus, even in such a model, there may be a case where the user who does not intend to use the facsimile function sets the facsimile function to disabled in the initial installation wizard, so that there similarly arises a problem that the aforementioned trouble must be dealt with in the fax standard model.

In some cases, the image forming apparatus is delivered to the user by having the system settings (including the home screen setting) user-customized before being installed in the user's environment. In this case, if the facsimile function is made disabled in the initial installation wizard, the home screen setting is changed according to this change in the function so that buttons related to the facsimile function become blank spaces, for example. Thus, there arises a problem that consideration must also be given to such a change.

### 1. First Embodiment

A first embodiment will be described below. In the first embodiment, the following will be described as an example. In the following embodiments, a case where the information processing apparatus of the present disclosure is applied to an image forming apparatus will be described.

### 1.1 Overall Configuration

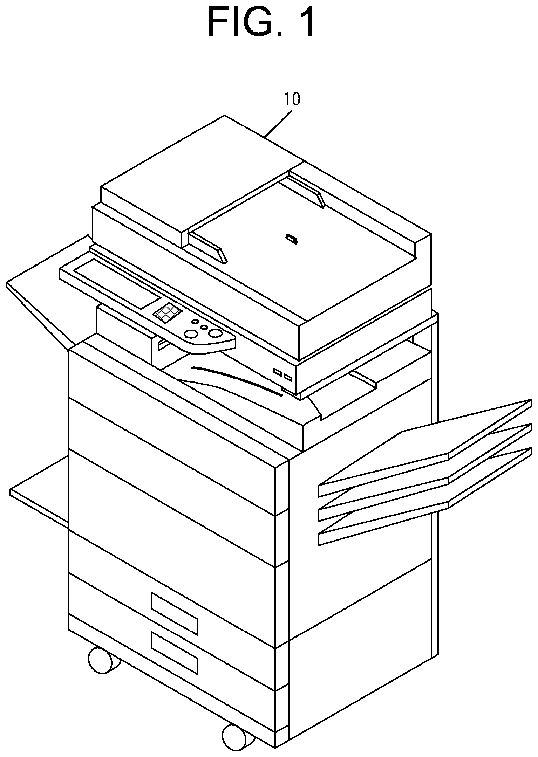

FIG. 1 is a diagram illustrating an outline of an image forming apparatus 10. The image forming apparatus 10 may be, for example, a printing apparatus, or may be an apparatus referred to as a multifunction machine or a multifunction peripheral/printer (MFP). For example, when the image forming apparatus 10 executes a job (a print job), the image forming apparatus 10 can form an image on paper, that is, a recording medium. As the jobs to be executed, the image forming apparatus 10 can execute jobs related to a plurality of functions such as a copy function, a facsimile function, a scan function, and a print function.

### 1.2 Hardware Configuration

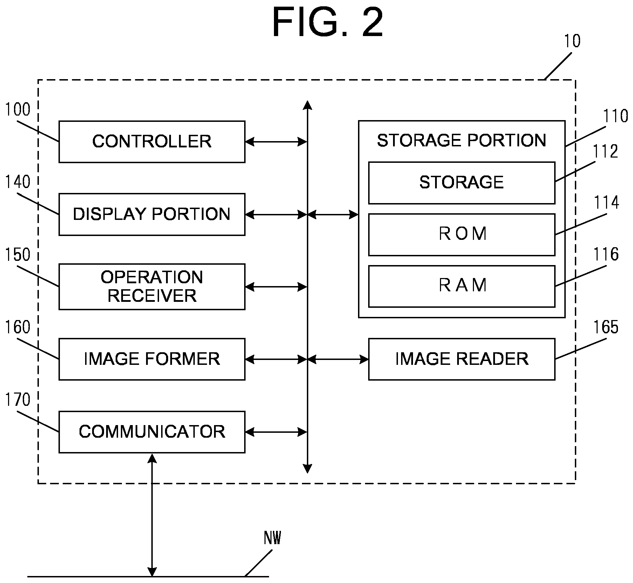

A hardware configuration of the image forming apparatus 10 will be described with reference to the drawings. FIG. 2 is a diagram illustrating an example of a hardware configuration of the image forming apparatus 10. In addition, the image forming apparatus 10 has general functions as necessary.

As illustrated in FIG. 2, the image forming apparatus 10 includes a controller 100, a storage 112, a read-only memory (ROM) 114, and a random-access memory (RAM) 116, which serve as a storage portion 110, a display portion 140, an operation receiver 150, an image former 160, an image reader 165, and a communicator 170.

The controller 100 controls the image forming apparatus 10 as a whole. The controller 100 implements various functions by reading and executing various programs stored in the storage portion 110 (for example, the storage 112 or the ROM 114). The controller 100 may be realized by, for example, one or more control devices/arithmetic devices (e.g., a central processing unit (CPU) or system-on-a-chip (SoC)). Further, the controller 100 may be configured by one or more control circuits.

The storage portion 110 is one or more storage devices that store various programs necessary for the operation of the image forming apparatus 10 and various kinds of data. The storage portion 110 is constituted of, for example, the storage 112, the ROM 114, the RAM 116, and the like.

The storage 112 is a non-volatile storage device capable of storing programs and data. For example, the storage 112 may be configured by a storage device such as a hard disk drive (HDD) or a solid state drive (SSD). Further, the storage 112 may be configured as a universal serial bus (USB) memory stick which can be connected as an external device. Furthermore, the storage 112 may be, for example, a storage area on the cloud.

The ROM 114 is a non-volatile memory capable of retaining programs and data even when the power is off.

The RAM 116 is a main memory to be mainly used when the controller 100 executes processing. The RAM 116 is a rewritable memory which temporarily holds the programs that have been read from the storage 112 or the ROM 114, and data including results of the processing execution.

The display portion 140 is a display device capable of displaying various kinds of information and various screens such as an execution screen. The display portion 140 may be, for example, a display device such as a liquid crystal display (LCD), an organic electro luminescence (EL) display, or an electrophoretic display. Further, the display portion 140 includes an interface to which a display device is connectable. For example, the display portion 140 may be configured by an external display device connectable via a high-definition multimedia interface (HDMI) (registered trademark), a digital visual interface (DVI), or a DisplayPort.

The operation receiver 150 is an operation device which can receive an operation input from the user. For example, the operation receiver 150 may be a software key displayed on a touch panel integrated with the display portion 140 or a hardware key such as an operation button. Further, the operation receiver 150 may be an operation device such as a keyboard or a mouse. Moreover, the operation receiver 150 may include an interface (e.g., a USB) to which the operation device can be connected. For example, a different operation device (a keyboard, a mouse, or the like) may be connected to the image forming apparatus 10 via the interface.

The image former 160 forms an image on recording paper, for example. The image former 160 includes, for example, an image carrier, forms a toner image on the image carrier, and transfers the toner image on the image carrier onto the recording paper, thereby forming an image. The image former 160 may be configured as an image forming apparatus such as a printer. Further, the image former 160 may electronically form an image as an image file.

The image reader 165 reads a document (an image), and outputs the read document as image data. The image reader 165 is, for example, a scanner, and may be a reading device using a charge-coupled device (CCD), a contact image sensor (CIS), or a complementary metal-oxide-semiconductor (CMOS) image sensor.

The communicator 170 is a communication interface which communicates with other devices. For example, the communicator 170 may be a network interface capable of providing wired connection or wireless connection. In the present embodiment, the communicator 170 can communicate with other devices via a network NW.

It is sufficient if the network (NW) that connects the image forming apparatus 10 is some kind of communication line or communication system. For example, as the network (NW), a communication system such as a local-area network (LAN) using wired or wireless transmission, a virtual local-area network (VLAN), the Internet, a public network, mobile communications (e.g., mobile communications such as 4G/5G/6G), or a next-generation telephone network may be used.

Note that the information processing apparatus of the present disclosure can be applied to, for example, an image processing apparatus or an image forming apparatus such as a scanner or a printer, or an information processing apparatus such as a smartphone or a tablet, apart from the image forming apparatus 10. In addition, the information processing apparatus may be a home appliance (for example, an air conditioner, a refrigerator, a television, or the like) equipped with an IoT function, a portable apparatus, or an in-vehicle apparatus (for example, a car navigation system or the like).

### 1.3 Software Configuration

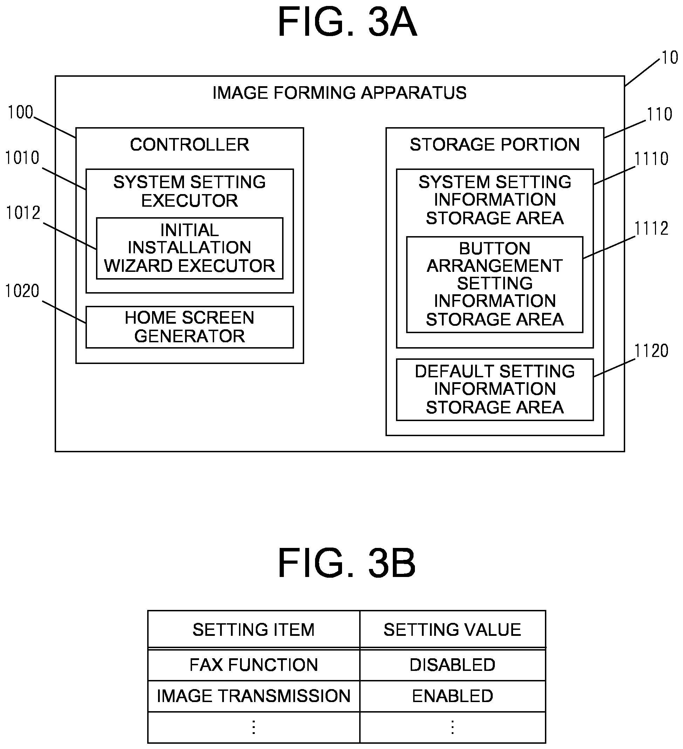

A main software configuration of the image forming apparatus 10 of the present disclosure will be described with reference to FIG. 3A. The software configuration illustrated in FIG. 3A mainly describes a configuration necessary in the present embodiment, and the other configurations are omitted.

The main software configuration of the image forming apparatus 10 will be described. For example, the controller 100 can realize a system setting executor 1010 and a home screen generator 1020 by reading and executing the programs stored in the storage 112 or the ROM 114.

The system setting executor 1010 can execute a system setting of the image forming apparatus 10. Here, execution of the system setting is intended as execution of processing of displaying a setting screen for making the setting necessary for various operations of the image forming apparatus 10 and receiving an input.

Examples of the setting which is necessary for the various operations of the image forming apparatus 10 include a function setting, which is the setting related to the use of various functions, a security setting such as an administrator password setting, and a network setting such as an IP address setting. Also, in the present embodiment, the image forming apparatus 10 may further include an initial installation wizard executor 1012 for executing an initial installation wizard.

The initial installation wizard executor 1012 executes the initial installation wizard. The initial installation wizard is a tool for executing the initial setting for making the settings necessary for the various operations of the image forming apparatus 10 in a wizard form, when, for example, the image forming apparatus 10 is delivered to the user and the user first activates the image forming apparatus 10. The wizard form refers to a form by which display screens are sequentially displayed in a predetermined order so as to execute the initial setting.

As an example of the wizard form, the initial installation wizard executor 1012 may execute the initial installation wizard by, for example, first displaying a setting screen for language setting, then displaying a setting screen for date and time, and then further displaying a setting screen for administrator password.

The home screen generator 1020 generates, on the basis of the system setting executed by the system setting executor 1010, a home screen. The home screen and the generation of the home screen will be described later.

The storage portion 110 reserves a system setting information storage area 1110 for storing system setting information. The system setting information is information which is referred to by the image forming apparatus 10 for operation, and is to be set by the initial installation wizard or the system setting. An example of the system setting information stored in the system setting information storage area 1110 will now be described with reference to FIG. 3B. As system information, setting items of the system setting (e.g., "Fax function") and setting values of the same (e.g., "Disabled") are stored.

The system setting information storage area 1110 may reserve an area for storing the system setting information for each category (for example, the network setting, the security setting, the function setting, and the like) of the system setting information.

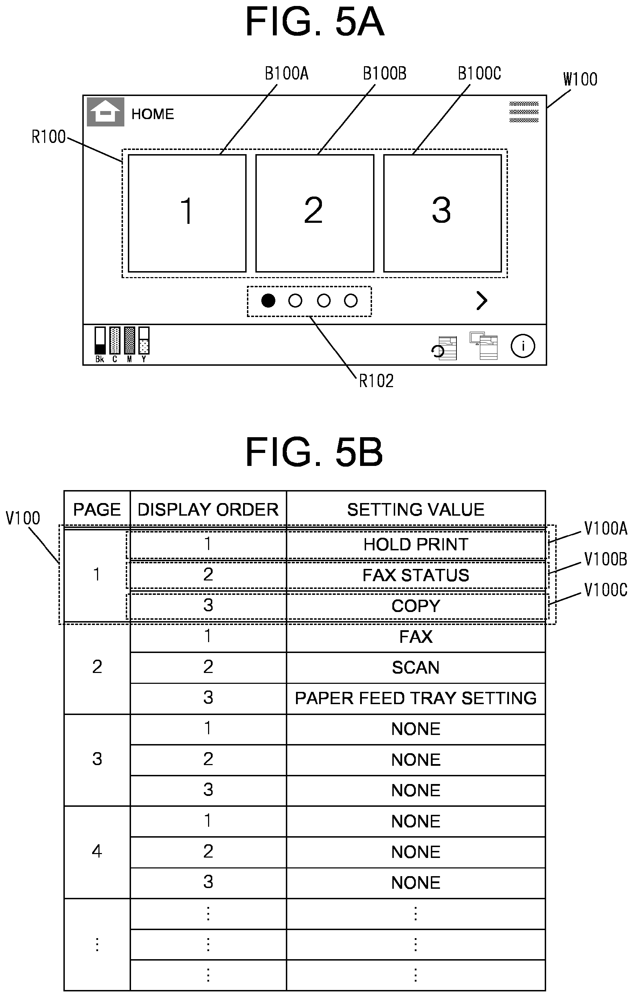

In the present embodiment, the system setting information storage area 1110 further reserves a button arrangement setting information storage area 1112. Button arrangement setting information is information indicating the state of button arrangement on the home screen. Further, a button on the home screen can execute a function when the user selects the button. An example of the button arrangement setting information stored in the button arrangement setting information storage area 1112 will now be described with reference to FIG. 5B. As the button arrangement setting information, page information (e.g., "1") indicating the order of the page of the home screen, a display order (e.g., "1") indicating the order of the button to be displayed on the page of the home screen, and a setting value (e.g., "hold print") are stored.

Further, in the present embodiment, when "None" is stored as the setting value of the button arrangement setting information, this setting value indicates that a "blank space" with no display of buttons is applicable. Further, in the present embodiment, while the button arrangement setting information includes information regarding the pages and the display order, the button arrangement setting information may store only the setting values.

The button arrangement refers to a layout of buttons, which correspond to the functions of the image forming apparatus 10, displayed at predetermined positions on the home screen. The buttons displayed on the home screen represent the button arrangement by being sequentially displayed at predetermined positions on the basis of the button arrangement setting information.

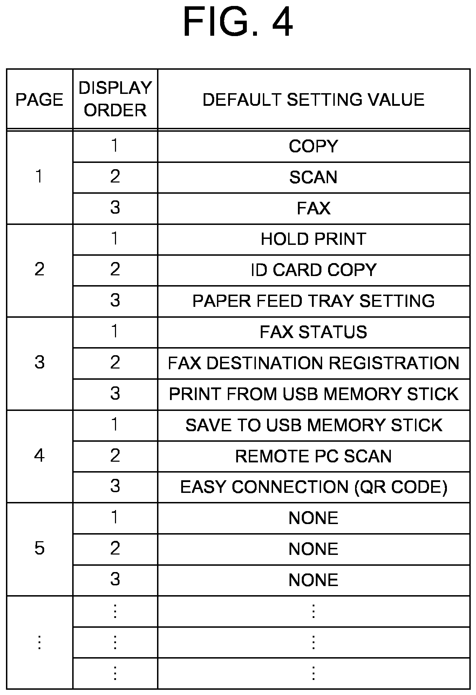

Also, the storage portion 110 reserves a default setting information storage area 1120 for storing default setting information. In the present embodiment, the default setting information is setting information indicating a preset value of the button arrangement setting information. An example of the default setting information stored in the default setting information storage area 1120 will now be described with reference to FIG. 4. As the default setting information, page information (e.g., "1"), a display order (e.g., "1"), and a default setting value (e.g., "copy") are stored.

In the present embodiment, the default setting information storage area 1120 stores, as first default setting information based on an initial state of the image forming apparatus 10, a factory default initial value, for example. The default setting information storage area 1120 may further store second default setting information based on an initial value after initial installation. As the second default setting information, an initial value based on the setting of whether to enable or disable a function by the function setting, for example, may be stored, as the initial value after initial installation. Here, the function setting refers to, for example, the setting including "enabled", which is the setting by which a function can be used, and "disabled", which is the setting by which the function cannot be used.

The default setting information storage area 1120 may, for example, store a plurality of pieces of default setting information for each function and each destination specification. As an example, the default setting information storage area 1120 may store, as the default setting information of the initial state, the first default setting information corresponding to the U.S. destination specification. Further, the default setting information storage area 1120 may store the second default setting information in which the function setting for the "fax function" is set to "disabled" as the initial value after initial installation, which is different from the value of the initial state.

### Home Screen Generator

A home screen and the home screen generator 1020 according to the present embodiment will be described with reference to FIGS. 5A and 5B. FIG. 5A is a diagram illustrating the button arrangement of the home screen to be displayed on the display portion 140 of the image forming apparatus 10. A display screen W100 of FIG. 5A reserves a display area R100 for displaying the buttons at predetermined positions in a sequential order, and a display area R102 including an indicator indicating, as the state of a page display, the page being displayed by way of identifiable display.

In the display area R100, a display button area B100A where a first button is arranged, a display button area B100B where a second button is arranged, and a display button area B100C where a third button is arranged are reserved. Meanwhile, in the display area R102, an indicator indicating that the display screen W100 is presenting the first page is displayed by way of identifiable display.

Incidentally, the home screen generator 1020 acquires button arrangement setting information V100 of the first page from the button arrangement setting information storage area 1112, as illustrated in FIG. 5B. Next, the home screen generator 1020 displays, in the display button area B100A, a button for hold print corresponding to button arrangement setting information V100A, which is the first button arrangement setting information, according to the display order in the button arrangement setting information V100.

Similarly, the home screen generator 1020 displays a button for fax status corresponding to button arrangement setting information V100B, which is the second button arrangement setting information, in the display button area B100B, and displays a button for copy corresponding to button arrangement setting information V100C, which is the third button arrangement setting information, in the display button area B100C.

In the present embodiment, the home screen generator 1020 arranges the buttons on the home screen on the basis of the information regarding the page and the display order of the button arrangement setting information. However, the home screen generator 1020 may generate the home screen on the basis of the order of the setting values alone, for example.

As an instance, the home screen generator 1020 generates, for example, a home screen displaying buttons based on the first to third setting values of the button arrangement setting information sequentially in the respective display button areas. Next, when the second page is to be generated, for example, the home screen generator 1020 generates a home screen displaying buttons based on the fourth to sixth setting values of the button arrangement setting information sequentially in the respective display button areas.

Note that, in the present embodiment, in a case where "None" is stored as the setting value of the button arrangement setting information, the home screen generator 1020 may present a "blank space" by which the home screen displays nothing, or may display an icon indicating a "blank space".

The term "icon" as used herein means a display of various kinds of data and processing functions on the display screen in the form of, for example, a picture, a pictogram, a symbol, or a character. When the user selects an icon, the controller 100 can execute the processing set to the icon. Among the icons, an icon that can be selected by the user may be included in the button.

### 1.4 Flow of Processing

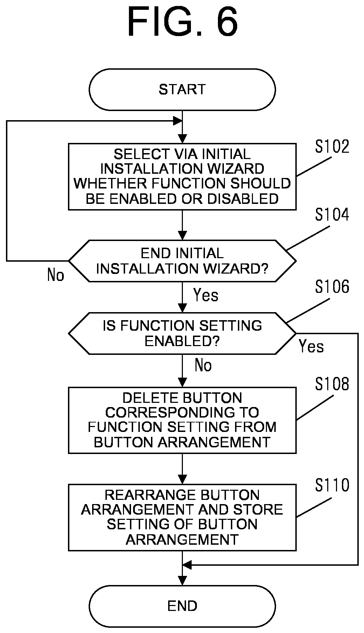

A flow of processing in the present embodiment will be described below with reference to FIG. 6. In the present embodiment, a case in which whether a part of the function settings is "enabled" or "disabled" is determined, and a home screen according to the determination is displayed will be described as an example.

First, the controller 100 displays a setting screen on which "enabled" or "disabled" of the function of the image forming apparatus 10 can be selected via the initial installation wizard, and causes the user to select "enabled" or "disabled" (S102). The controller 100 stores the setting of enabled or disabled that has been selected by the user in the system setting information storage area 1110 as the function setting.

Next, the controller 100 determines whether or not the initial installation wizard is to be ended (S104). The controller 100 may determine that the initial installation wizard is to be ended when all of the setting screens have been displayed through the initial installation wizard, or the user has selected an end. The controller 100 displays the setting screen and keeps waiting until the initial installation wizard is ended (S104; No → S102).

If it is determined that the initial installation wizard is to be ended, the controller 100 determines whether or not the function setting is set to "enabled" (S104; Yes → S106). The controller 100 may determine whether the function setting (e.g., fax function) is set to "enabled" or "disabled" by referring to the setting value of the system setting information, for example. If is determined by the controller 100 that the function setting is "enabled", the controller 100 ends the processing as it is (S106; Yes).

Meanwhile, if it is determined by the controller 100 that a part of the function settings is set to "disabled", the controller 100 deletes the buttons corresponding to the function setting set to be disabled from a button arrangement table (S106; No → S108). The following method is considered as a method of deleting a button corresponding to the function setting that is set to disabled from the button arrangement table. Here, the method will be described on the basis of an example in which the "fax function" is set to "disabled".

First, the controller 100 reads default setting information. Next, the controller 100 generates a button arrangement table based on the default setting information. The button arrangement table may be, for example, information on the button arrangement that is temporarily stored in the storage portion 110, and it suffices that the button arrangement table includes at least the setting values.

Next, the controller 100 deletes a button related to the "fax function" from the button arrangement table. Here, among the setting values of the table, the controller 100 may delete "fax" and "fax status", for example, as the setting values to which the attribute of the "fax function" is given in advance.

In this connection, for example, the controller 100 may delete the setting value by substituting "None" into the setting value of the button arrangement table, or may delete the setting value by assigning a specific value, such as a null value, a "blank space", or a "blank", to the setting value of the button arrangement table. For example, the controller 100 deletes the setting value by substituting "None" into the setting values that are "fax" and "fax status".

Alternatively, the controller 100 may use the button arrangement setting information instead of the button arrangement table, and may directly delete the setting values of the button arrangement setting information. In this case, for example, the controller 100 may delete the setting values related to the "fax function" from the button arrangement setting information.

In the present embodiment, an example of displaying a home screen on which the "fax function" set to "enabled" in the initial state (as the default setting value, for example) is deleted will be described. However, a button may also be added to the button arrangement table while the "fax function" is set to "disabled" in the initial state. Specifically, in the button arrangement table which has been read in S108, the controller 100 confirms that the setting value related to the "fax function" is set to "None". The controller 100 may add a button by substituting the setting value which is "fax" or "fax status", for example, into the setting value of the button arrangement table.

Next, the controller 100 rearranges the button arrangement table and stores the setting of the button arrangement in the button arrangement setting information storage area 1112 (S110). Here, the following method, for example, is considered as a method of rearranging the button arrangement table.

First, the controller 100 may determine whether or not there is a blank space in the button arrangement table. Here, there being a blank space means, for example, a state in which a button is hidden from display for a button not displayed on the home screen. As an example, a case where the setting value of the button arrangement table indicates "None" or a case where the setting value is deleted may apply to the above state. In contrast, there being no blank space means, for example, a state in which a button is displayed on the home screen. Note that the controller 100 may make the determination by generating a home screen on which the buttons are virtually arranged as blank spaces.

The controller 100 compares, for example, a list of home screens stored in the image forming apparatus 10 (i.e., default setting information as an example) with a list of home screens edited by the user (i.e., a button arrangement table as an example), in accordance with the function selected by the user via the initial installation wizard. For example, when the default setting information does not agree with the button arrangement table, the controller 100 may determine that there is a blank space in the button arrangement table.

Next, when there is a blank space in the button arrangement table, the controller 100 may determine that there is a blank space between the buttons. The controller 100 may set a blank space for a place where the default setting information and the button arrangement table do not agree with each other (for example, assign "None" to the setting value), and when a button is arranged in such order that is after this blank space, the controller 100 may determine that there is a blank space between the buttons in the button arrangement table.

Next, when there is a blank space between the buttons in the button arrangement table, the controller 100 generates a button arrangement table in which the blank space in the button arrangement is filled, that is, the buttons are arranged close to each other. For example, when there is a button after the blank space in the button arrangement table, the controller 100 generates a button arrangement table in which the arrangement is changed such that a state in which no button exists after the blank space is exhibited.

As an example, the controller 100 changes the positions of the buttons by bringing the buttons into such a state that a blank space between the buttons is filled by, for example, moving a button arranged in such order that is after the blank space to be located before the blank space, interchanging the blank space with the button, or deleting the blank space. Then, the controller 100 stores the button arrangement table in which the blank space is filled in the button arrangement setting information.

When a setting value (e.g., "None") indicating a blank space is stored in the button arrangement table, the controller 100 may determine that a blank space is included in the setting value without comparing the default setting information with the button arrangement table.

### 1.5 Example of Operation

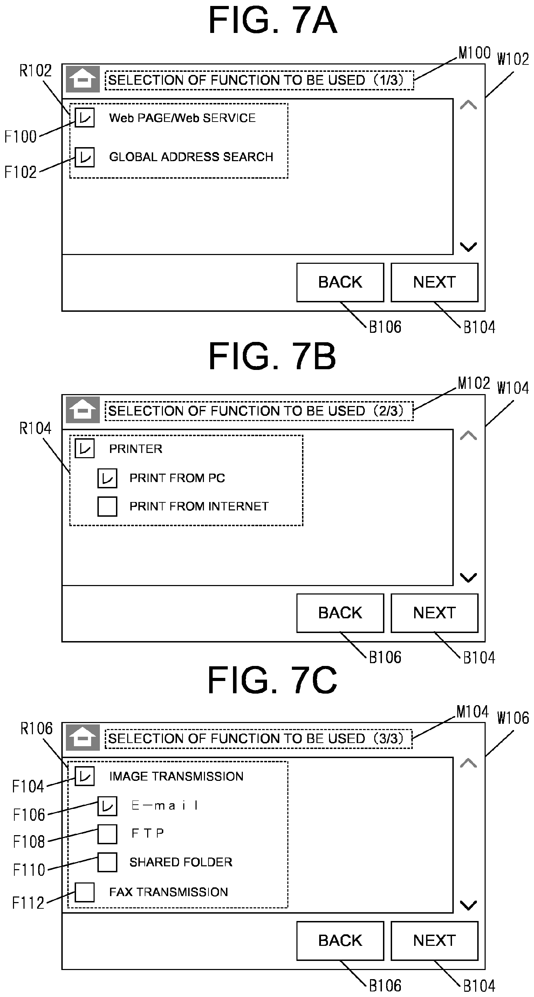

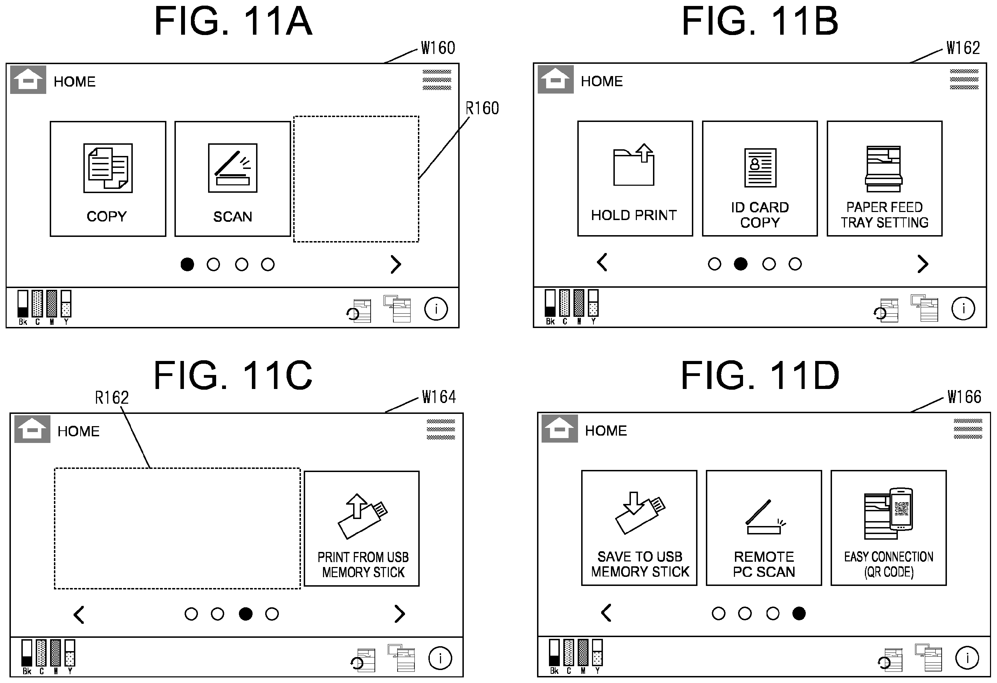

Figures indicated as FIGS. 7A to 7C to Figures indicated as FIGS. 11A to 11D are diagrams illustrating an example of operation of the image forming apparatus 10 according to the present embodiment. In the present embodiment, description will be given by taking the case in which the user selects either a home screen of a factory default state in which a fax function is set to enabled or a home screen in which the fax function is set to disabled as an example.

FIG. 7A is a diagram illustrating, as a setting screen for executing the function setting in the initial installation wizard, an operation of a display screen to be displayed on the display portion 140 of the image forming apparatus 10.

On a display screen W102 of FIG. 7A, a message M100, which is "Selection of Function to be used (1/3)", a display button B104 for displaying the next setting screen, and a display button B106 for displaying the immediately preceding setting screen are displayed. Further, in the display screen W102, a display area R102 for selecting whether a function is to be enabled or disabled is reserved. Further, in the display area R102, a checkbox F100 and a checkbox F102 for selecting enablement or disablement of the function are displayed in such a state that the functions are selected.

FIG. 7B is a diagram illustrating an operation of a display screen to be displayed on the display portion 140 of the image forming apparatus 10 when the user selects the display button B104 on the display screen W102. On a display screen W104 of FIG. 7B, a message M102, which is "Selection of Function to be used (2/3)" is displayed, and a display area R104 for selecting whether a function is to be enabled or disabled is reserved.

FIG. 7C is a diagram illustrating an operation of a display screen to be displayed on the display portion 140 of the image forming apparatus 10 when the user selects the display button B104 on the display screen W104. On a display screen W106 of FIG. 7C, a message M104, which is "Selection of Function to be used (3/3)" is displayed, and a display area R106 for selecting whether a function is to be enabled or disabled is reserved. Here, in the display area R106, a checkbox F104 and a checkbox F106 for selecting enablement or disablement of the function are displayed in such a state that the functions are selected (enabled). Meanwhile, in the display area R106, a checkbox F108, a checkbox F110, and a checkbox F112 are displayed in such a state that the functions are not selected (disabled).

In the present embodiment, "Image transmission" and "Fax" are displayed on the same display screen. However, the controller 100 may provide a display screen for displaying only the item for "Fax" (for example, a selection screen for the function to be used including only the checkbox for the "fax function" on Selection of Function to be used (4/4)).

In addition, in a case where it is not possible to entirely display the selectable functions on each of the selection screens for the function to be used (e.g., the display screen W102, the display screen W104, and the display screen W106), the controller 100 may display a slide bar on the selection screen for the function to be used and make the display screen slidable. Also in such a case, the controller 100 may display a checkbox for the fax function on another selection screen for the function to be used.

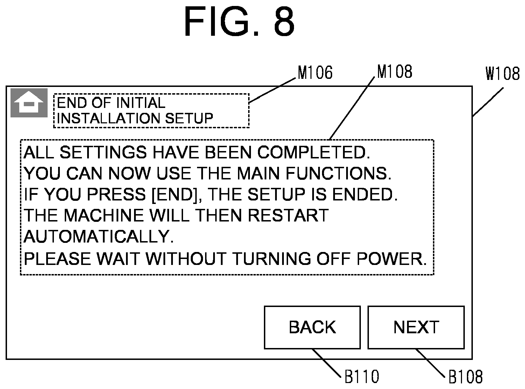

FIG. 8 is a diagram illustrating an operation of a display screen to be displayed on the display portion 140 of the image forming apparatus 10 after the display button B104 has been selected on the display screen W106, for example, via the initial installation wizard.

On a display screen W108 of FIG. 8, a message M106, which is "End of initial installation setup", a display button B108 for selecting an end of the initial installation wizard, and a display button B110 for displaying the immediately preceding setting screen are displayed. Further, on the display screen W108, a message M108 indicating "All settings have been completed. You can now use the main functions. If you press [End], the setup is ended. The machine will then restart automatically. Please wait without turning off power." is displayed.

Here, when the user selects the display button B108, the controller 100 updates the arrangement of the home of the image forming apparatus 10, and if the "fax function" is "enabled" (S106; Yes), displays a display screen W120 on the display portion 140. Meanwhile, if the "fax function" is "disabled" (S106; No), the controller 100 displays a display screen W140 on the display portion 140.

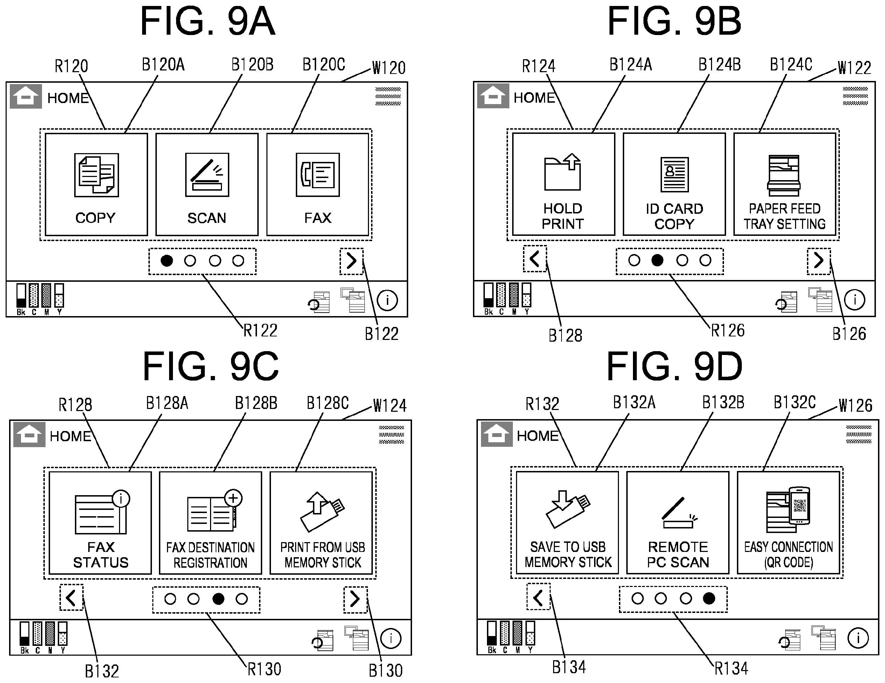

FIG. 9A is a diagram illustrating, as a home screen corresponding to the case where the fax function is enabled, an operation of a display screen to be displayed on the display portion 140 of the image forming apparatus 10. In the display screen W120 of FIG. 9A, a display area R120 for displaying buttons (icons) at predetermined positions, and a display area R122 indicating that the first page of the home screen is being displayed are reserved, and a display button B122 for displaying the second page of the home screen is displayed.

In the display area R120, an icon B120A for a copy function, an icon B120B for a scan function, and an icon B120C for a fax function are displayed. Meanwhile, an indicator indicating that the page corresponds to the first page is identifiably displayed in the display area R122.

FIG. 9B is a diagram illustrating an operation of a display screen to be displayed on the display portion 140 of the image forming apparatus 10 when the display button B122 is selected on the display screen W120. In a display screen W122 of FIG. 9B, a display area R124 for displaying the buttons at predetermined positions, and a display area R126 indicating that the second page of the home screen is being displayed are reserved. Further, a display button B126 for displaying the third page of the home screen and a display button B128 for displaying the first page of the same are displayed on the display screen W122.

In the display area R124, an icon B124A for a hold print function, an icon B124B for an ID card copy function, and an icon B124C for a paper feed tray setting function are displayed. Meanwhile, an indicator indicating that the page corresponds to the second page is identifiably displayed in the display area R126.

FIG. 9C is a diagram illustrating an operation of a display screen to be displayed on the display portion 140 of the image forming apparatus 10 when the display button B126 is selected on the display screen W122. In a display screen W124 of FIG. 9C, a display area R128 for displaying the buttons at predetermined positions, and a display area R130 indicating that the third page of the home screen is being displayed are reserved. Further, a display button B130 for displaying the fourth page of the home screen and a display button B132 for displaying the second page of the same are displayed on the display screen W124.

In the display area R128, an icon B128A for a fax status function, an icon B128B for a fax destination registration function, and an icon B128C for a print-from-USB memory stick function are displayed. Here, the icon B128A and the icon B128B are the icons to which the same attribute as that of the fax function is given. Meanwhile, an indicator indicating that the page corresponds to the third page is identifiably displayed in the display area R130.

FIG. 9D is a diagram illustrating an operation of a display screen to be displayed on the display portion 140 of the image forming apparatus 10 when the display button B130 is selected on the display screen W124. In a display screen W126 of FIG. 9D, a display area R132 for displaying the buttons at predetermined positions, and a display area R134 indicating that the fourth page of the home screen is being displayed are reserved. Further, a display button B134 for displaying the third page of the home screen is displayed on the display screen W126.

In the display area R132, an icon B132A for a save-to-USB memory stick function, an icon B132B for a remote PC scan function, and an icon B132C for an easy connection function are displayed. Meanwhile, an indicator indicating that the page corresponds to the fourth page is identifiably displayed in the display area R134.

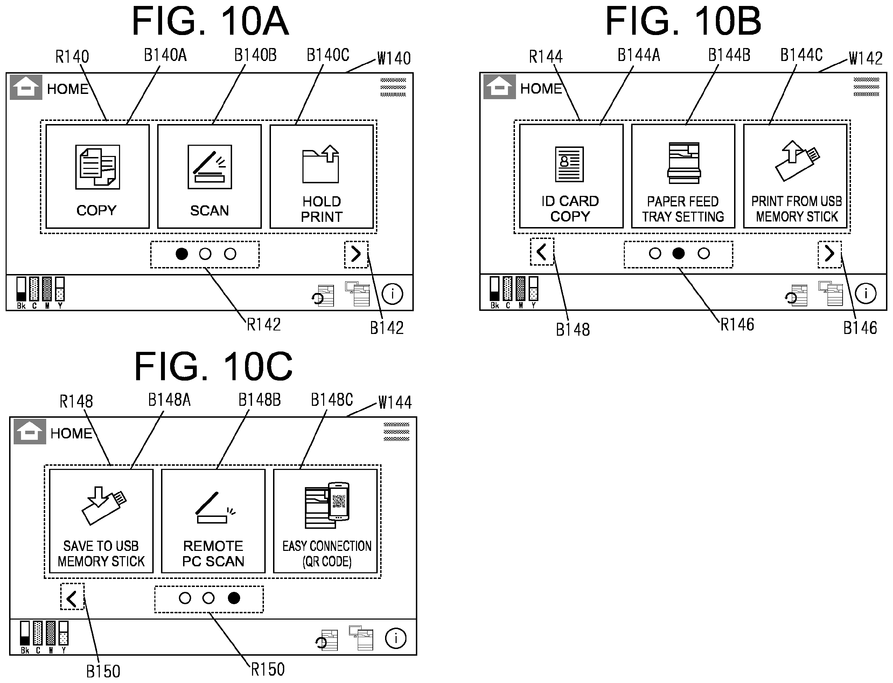

FIG. 10A is a diagram illustrating, as a home screen corresponding to the case where the fax function is disabled, an operation of a display screen to be displayed on the display portion 140 of the image forming apparatus 10. In the display screen W140 of FIG. 10A, a display area R140 for displaying the buttons at predetermined positions, and a display area R142 indicating that the first page of the home screen is being displayed are reserved, and a display button B142 for displaying the second page of the home screen is displayed.

In the display area R140, an icon B140A for a copy function, an icon B140B for a scan function, and an icon B140C for a hold print function are displayed. Here, the controller 100 displays the home screen in a rearranged state by deleting the fax function from the icon B140C and filling in the hold print function instead. Meanwhile, an indicator indicating that the page corresponds to the first page is identifiably displayed in the display area R142.

FIG. 10B is a diagram illustrating an operation of a display screen to be displayed on the display portion 140 of the image forming apparatus 10 when the display button B142 is selected on the display screen W140. In a display screen W142 of FIG. 10B, a display area R144 for displaying the buttons at predetermined positions, and a display area R146 indicating that the second page of the home screen is being displayed are reserved. Further, a display button B146 for displaying the third page of the home screen and a display button B148 for displaying the first page of the same are displayed on the display screen W142.

In the display area R144, an icon B144A for an ID card copy function, an icon B144B for a paper feed tray setting function, and an icon B144C for a print-from-USB memory stick function are displayed. Here, the controller 100 displays the home screen in a rearranged state by deleting the "fax status function" and the "fax destination registration function" belonging to the "fax function" and filling in the "print-from-USB memory stick function" instead. Meanwhile, an indicator indicating that the page corresponds to the second page is identifiably displayed in the display area R146.

FIG. 10C is a diagram illustrating an operation of a display screen to be displayed on the display portion 140 of the image forming apparatus 10 when the display button B146 is selected on the display screen W142. In a display screen W144 of FIG. 10C, a display area R148 for displaying the buttons at predetermined positions, and a display area R150 indicating that the third page of the home screen is being displayed are reserved. Further, a display button B150 for displaying the second page of the home screen is displayed on the display screen W144.

In the display area R148, an icon B148A for a save-to-USB memory stick function, an icon B148B for a remote PC scan function, and an icon B148C for an easy connection function are displayed. Meanwhile, an indicator indicating that the page corresponds to the third page is identifiably displayed in the display area R150.

FIGS. 11A to 11D are diagrams illustrating a conventional home screen to which the present embodiment is not applied in a case where the fax function is set to disabled. In a display screen W160 of FIG. 11A, an area R160 in which the fax function is deleted and a blank space is presented instead is reserved. Further, in a display screen W164 of FIG. 11C, an area R162 in which the "fax status function" and the "fax destination registration function" belonging to the "fax function" are deleted and a blank space is presented instead is reserved.

Note that a display screen W162 of FIG. 11B is the same as the display screen W122, and a display screen W166 of FIG. 11D is the same as the display screen W126. Thus, description of these display screens will be omitted.

When the fax function is made enabled in the initial installation wizard, the button arrangement setting information becomes identical to the default setting information in which factory default initial values are stored. The controller 100 ends the initial installation wizard without overwriting the button arrangement setting information and without changing the button arrangement. Then, the controller 100 displays, on the basis of the button arrangement setting information, a home screen having the button arrangement as indicated in the display screens W120 to W126 of FIGS. 9A to 9D, on the display portion 140.

In contrast, when the fax function is made disabled in the initial installation wizard, the controller 100 deletes the buttons related to the fax function from a button arrangement table. Next, the controller 100 stores (overwrites), in the button arrangement setting information, the button arrangement table from which the buttons related to the fax function are deleted, and ends the initial installation wizard.

Also in the present embodiment, the controller 100 may virtually generate a home screen with a blank or a blank space being present on the home screen. As an example, in a case where the "fax function" is disabled, the controller 100 hides the icons related to the "fax function" (e.g., the icon B120C, the icon B128A, and the icon B128B) and presents blank spaces. Further, for example, the controller 100 stores the positions of the button arrangement in the button arrangement setting information by having the positions of the button arrangement fixed and not filled.

The controller 100 may virtually generate, on the basis of the button arrangement setting information, a home screen having the button arrangement in a state where the blank spaces (the area R160 and the area R162, for example) as indicated in the display screen W160 and the display screen W164 of FIG. 11A and FIG. 11C are presented.

In this connection, in the present embodiment, the controller 100 stores a button arrangement table in which the blank spaces are eliminated in the button arrangement setting information. The controller 100 changes the position of a button, as the button that is displayed in such order that is after the area R160 of the display screen W160, for example, by moving the icon for hold print on the display screen W162 to the blank space area R160. The controller 100 displays, on the basis of the button arrangement setting information, a home screen for which the button arrangement is rearranged as indicated in the display screens W140 to W144 of FIGS. 10A to 10C, on the display portion 140.

That is, at the timing when the fax function is set to disabled via the initial installation wizard, the image forming apparatus 10 can eliminate the buttons related to only the fax function in regard to the button arrangement setting of the home screen. Further, the image forming apparatus 10 can change and reset the positions of the buttons in a such state that the buttons are arranged close to each other, that is, there exists no blank space before the buttons that are displayed on the home screen. By this feature, for example, the image forming apparatus 10 can eliminate needless blank spaces on the home screen after a restart of the image forming apparatus 10, whereby the trouble that the administrator needs to change the settings after executing the initial installation wizard can be reduced.

Further, in a case where the image forming apparatus 10 is to be shipped to a destination having the legal regulations such as the Cybersecurity Act including, for example, Radio Equipment Directive (RED), even if a facsimile machine is physically connected in the image forming apparatus 10, a fax function thereof is set to disabled in the initial state. Even in such a case where the fax function is made disabled from both a software perspective and a physical standpoint, the image forming apparatus 10 can eliminate needless blank spaces on the home screen caused by the disablement of the fax function.

### 1.6 Advantageous Effects and the like

According to the present embodiment, for example, it is possible to provide an information processing apparatus and the like capable of displaying a user interface on which the positions of the buttons are appropriately changed, on the basis of the function selected by the user.

In addition, in making the initial setting, on the basis of the function selected by the user, arrangement data for the icons (buttons) corresponding to the function selected by the user is reflected at the time of restarting. By virtue of this feature, since the user does not need to change the arrangement of the icons corresponding to the functions on the home screen, it is possible to reduce the work time required for making the setting for the button arrangement.

### 2. Second Embodiment

A second embodiment will be described below. The second embodiment corresponds to an embodiment in which, even when a fax function is made disabled via the initial installation wizard, if the button arrangement setting of the home screen has already been changed from that at the time of shipment from a factory, it is determined that the setting has been made by the user, and resetting is prevented from being made.

In the second embodiment, description will be omitted for the parts whose hardware and software configurations are the same as those of the first embodiment, and the points that are different from the first embodiment will be mainly described.

### 2.1 Flow of Processing

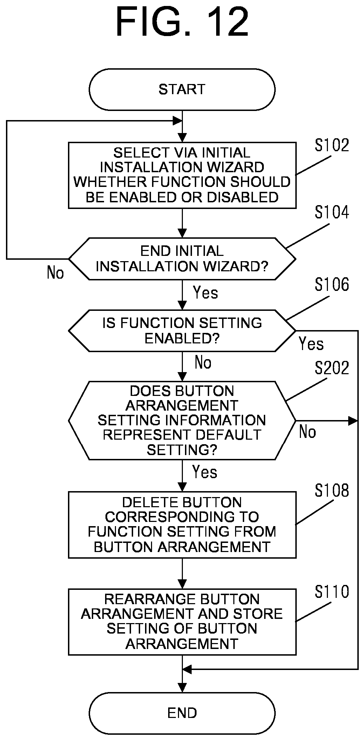

A flow of processing in the present embodiment will be described below with reference to FIG. 12. FIG. 12 is a figure in which FIG. 6 of the first embodiment is replaced, and S202 is executed between S106 and S108.

If it is determined by a controller 100 that a part of the function settings is set to "disabled", the controller 100 determines whether or not button arrangement setting information represents a default setting (S106; No → S202). The controller 100 compares the button arrangement setting information with default setting information, and determines that the button arrangement setting information represents the default setting if these pieces of information agree with each other. In this context, the default setting refers to a default setting value.

If it is determined by the controller 100 that the button arrangement setting information represents the default setting, the controller 100 deletes a button corresponding to the function setting set to "disabled" from a button arrangement table (S202; Yes → S108). Meanwhile, if it is determined by the controller 100 that the button arrangement setting information does not represent the default setting, the button arrangement setting information is determined as having been user-customized in advance, and the controller 100 ends the processing as it is (S202; No).

Further, for example, the controller 100 may determine whether or not the setting corresponds to the default setting from the presence or absence of a blank space between the buttons arranged in the button arrangement setting information. For example, the controller 100 may compare the button arrangement setting information with the default setting information, and determine, if there is a blank space between the buttons, that the setting corresponds to the default setting, and determine, if there is no blank space between the buttons, that the setting has been customized (does not correspond to the default setting).

Also, the controller 100 may compare the button arrangement setting information with a plurality of pieces of default setting information. For example, the controller 100 may determine that the button arrangement setting information represents the default setting in a case where the button arrangement setting information agrees with one of first default setting information based on a factory default state and second default setting information based on function settings.

### 2.2 Example of Operation

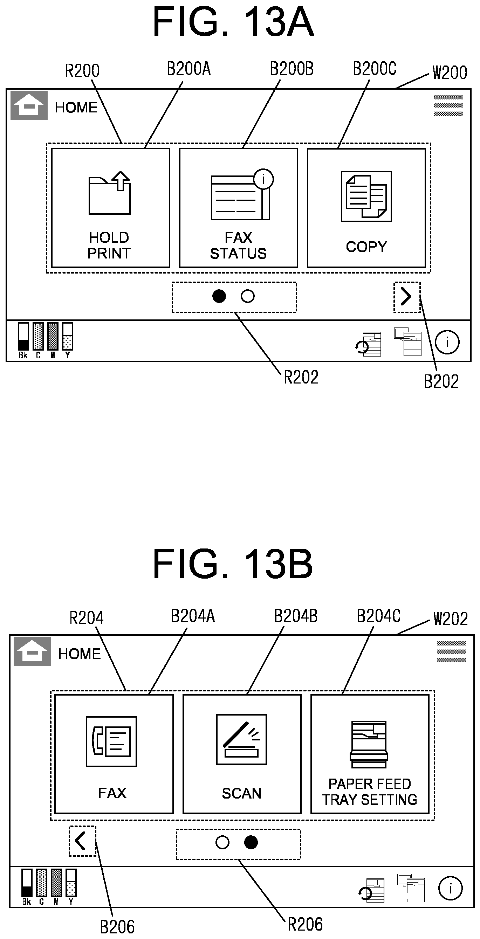

FIG. 13A is a diagram illustrating an operation of a display screen, which is to be displayed on a display portion 140 of an image forming apparatus 10, when a fax function is selected to be disabled in an initial installation wizard, in a case where user-customized button arrangement setting information is already stored.

In a display screen W200 of FIG. 13A, a display area R200 for displaying buttons (icons) at predetermined positions, and a display area R202 indicating that the first page of a home screen is being displayed are reserved, and a display button B202 for displaying the second page of the home screen is displayed.

In the display area R200, an icon B200A for a hold print function, an icon B200B for a fax status function, and an icon B200C for a copy function are displayed. Meanwhile, an indicator indicating that the page corresponds to the first page is identifiably displayed in the display area R202.

FIG. 13B is a diagram illustrating an operation of a display screen to be displayed on the display portion 140 of the image forming apparatus 10 when the display button B202 is selected on the display screen W200. In a display screen W202 of FIG. 13B, a display area R204 for displaying the buttons at predetermined positions, and a display area R206 indicating that the second page of the home screen is being displayed are reserved. Further, a display button B206 for displaying the first page of the home screen is displayed on the display screen W202.

In the display area R204, an icon B204A for a fax function, an icon B204B for a scan function, and an icon B204C for a paper feed tray setting function are displayed. Meanwhile, an indicator indicating that the page corresponds to the second page is identifiably displayed in the display area R206.

As described above, when it is determined by the controller 100 that the arrangement of the icons has been set in advance in a button arrangement setting information storage area 1112, the controller 100 does not overwrite the arrangement of the icons on the home screen even if the user edits the setting of the functions. For example, while the controller 100 compares the default setting information with internal data such as the icon arrangement, in a case where it is determined that there is no blank between the icons and the arrangement has been set in advance by the user, the controller 100 does not store the button arrangement setting information at the time of restarting even if the "fax function" is set to "disabled" via the initial installation wizard.

### 3. Third Embodiment

A third embodiment will be described below. The third embodiment corresponds to an embodiment in which, in a case where enablement or disablement of a function setting is selected via a system setting other than the initial installation wizard, a home screen corresponding to the function selected by the user can be displayed.

In the third embodiment, description will be omitted for the parts whose hardware and software configurations are the same as those of the first embodiment, and the points that are different from the first embodiment will be mainly described.

### 3.1 Flow of Processing

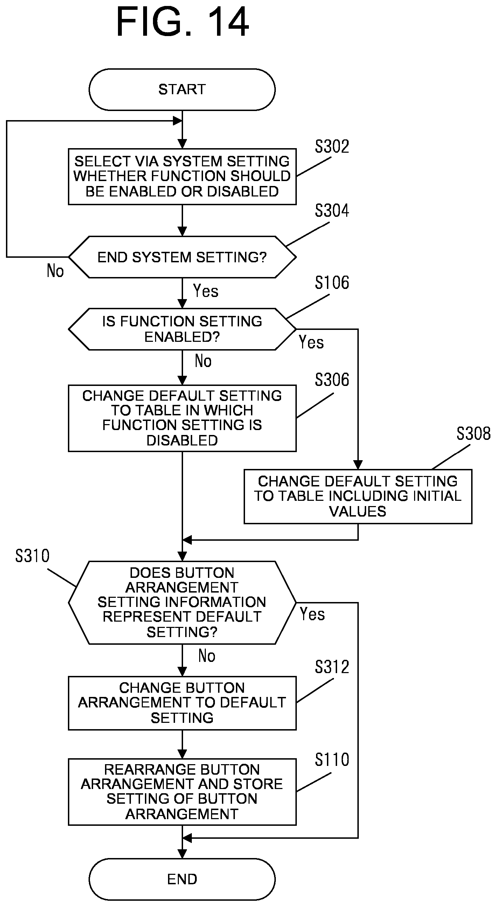

A flow of processing in the present embodiment will be described below with reference to FIG. 14. FIG. 14 is a figure in which FIG. 6 of the first embodiment is replaced, and S302 and S304 are executed before S106, and S306 to S312 are executed after S106.

First, a controller 100 displays a setting screen on which enablement or disablement of a function of an image forming apparatus 10 can be selected via a system setting, and causes the user to select "enabled" or "disabled" (S302).

Next, the controller 100 determines whether or not the system setting is to be ended (S304). The controller 100 may determine that the system setting is to be ended when, for example, the user has selected an end as in the initial installation wizard. The controller 100 displays the setting screen and keeps waiting until the system setting is ended (S304; No → S302).

If it is determined that the system setting is to be ended, the controller 100 determines whether or not the function setting is set to "enabled" (S304; Yes → S106).

Meanwhile, if it is determined that a part of the function settings is set to "disabled", the controller 100 changes the default setting to a table in which the function setting is disabled (S106; No → S306). The table in which the function setting is disabled may be, for example, a second default setting based on the initial values after initial installation. For example, when the "fax function" is set to "disabled" via the initial installation wizard, second default setting information obtained by deleting buttons corresponding to the "fax function" may be applied.

If it is determined that the function setting is "enabled", the controller 100 changes the default setting to a table including the initial values (S106; Yes → S308). Here, the table including the initial values may be, for example, first default setting information based on the initial state.

Next, the controller 100 determines whether or not button arrangement setting information represents the default setting (S310). For example, the controller 100 may compare the button arrangement setting information with the default setting information, and determine that the button arrangement setting information represents the default setting if the button arrangement setting information agrees with the default setting information.

If it is determined that the button arrangement setting information does not represent the default setting, the controller 100 stores the default setting information in the button arrangement setting information (S310; No → S312). Meanwhile, if it is determined that the button arrangement setting information represents the default setting, the controller 100 ends the processing as it is (S310; Yes).

### 3.2 Example of Operation

For example, in a case where the user has erroneously set the "fax function" to "disabled" in the initial installation wizard and ended the initial installation wizard, the controller 100 displays a home screen in a state in which a button for the "fax function" is not displayed on a display portion 140.

Here, when the user sets the "fax function" to "enabled" in the system setting, the controller 100 changes the default setting information to a factory default initial value (for example, a first default setting), and displays a home screen on which the button for the "fax function" is displayed on the display portion 140.

Meanwhile, when the user sets the "fax function" to "disabled" in the system setting, the controller 100 changes the setting value to a default setting value (for example, the second default setting) based on the function setting, and displays, on the display portion 140, a home screen on which the button for the "fax function" is not displayed, and which is rearranged with no blank spaces.

That is, when the fax function is set to be disabled in the initial installation wizard, second default information in which the fax function is set to disabled is stored in a default setting information storage area 1120. In this connection, for example, in a case where a button, which corresponds to a function for which the fax function is set to be enabled in the system setting, is included in first default information, regardless of whether the button is included in the second default information or not, the button can be rearranged and displayed on the home screen.

As described above, the user can change the setting of the function to "enabled" or "disabled" in the initial installation wizard or the system setting. Here, when the function is changed from "disabled" to "enabled", the controller 100 simultaneously changes the arrangement of the buttons to that corresponding to the default setting information. As the controller 100 makes this change, the enabled function can be displayed on the home screen. Accordingly, there is no need for the user to newly change the button arrangement corresponding to the function on the home screen after conducting the system setting.

### 4. Fourth Embodiment

A fourth embodiment will be described below. The fourth embodiment corresponds to an embodiment capable of determining enablement or disablement for each of a plurality of function settings, and displaying a home screen having arrangement of buttons corresponding to the function settings.

In the fourth embodiment, description will be omitted for the parts whose hardware and software configurations are the same as those of the first embodiment, and the points that are different from the first embodiment will be mainly described.

### 4.1 Flow of Processing

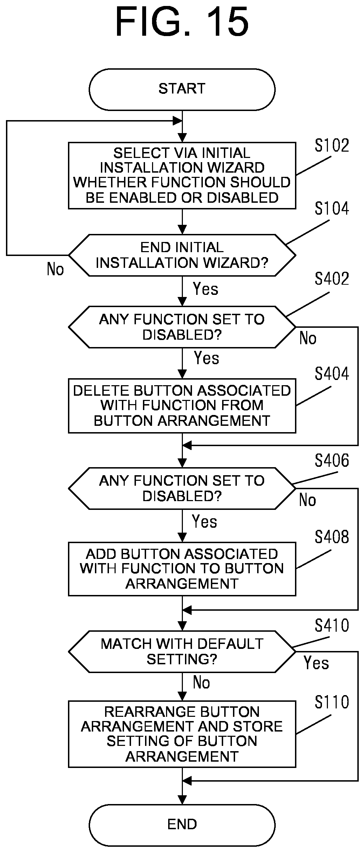

A flow of processing in the present embodiment will be described below with reference to FIG. 15. FIG. 15 is a figure in which FIG. 6 of the first embodiment is replaced, and S402 to S410 are executed between S104 and S110.

If it is determined that an initial installation wizard is to be ended, a controller 100 determines whether or not there is a function for which the function setting has been set to "disabled" (S104; Yes → S402). The controller 100 determines whether there is a function for which the function setting has been set to "disabled" by referring to system setting information.

If it is determined that there is a function which has been set to "disabled", the controller 100 deletes a button associated with that function from button arrangement table (S402; Yes → S404).

Next, the controller 100 determines whether or not there is a function for which the function setting has been set to "enabled" (S402; Yes → S404 → S406). Similarly, also for the case where there is no function which has been set to "disabled", the controller 100 determines whether or not there is a function for which the function setting has been set to "enabled" (S402; No → S406).

The controller 100 determines whether there is a function for which the function setting has been set to "enabled" by referring to the system setting information as in S402. If it is determined that there is a function for which the function setting has been set to "enabled", the controller 100 adds a button associated with that function to the button arrangement table (S406; Yes → S408).

Next, the controller 100 determines, for example, whether or not the button arrangement table matches with default setting (S410). For example, the controller 100 makes the determination by comparing default setting information with the button arrangement table generated by the processing from S402 to S408. If the generated button arrangement table and the default setting information match with each other, the controller 100 ends the processing as it is (S410; Yes).

Meanwhile, if the default setting information and the button arrangement table generated by the processing from S402 to S408 are not the same, the controller 100 rearranges the button arrangement table and stores the rearranged button arrangement table in a button arrangement setting information storage area 1112 as button arrangement setting information (S410; No → S110).

### 4.2 Example of Operation

In the present embodiment, for example, the user can display, on a display portion 140, a home screen on which a plurality of functions of an image forming apparatus 10, such as a scan function in addition to a fax function, are set to disabled.

### 5. Fifth Embodiment

A fifth embodiment will be described below. The fifth embodiment corresponds to an embodiment in which a confirmation screen is displayed at an end of an initial installation wizard or when a system setting is to be ended.

In the fifth embodiment, description will be omitted for the parts whose hardware and software configurations are the same as those of the first embodiment, and the points that are different from the first embodiment will be mainly described.

### 5.1 Flow of Processing

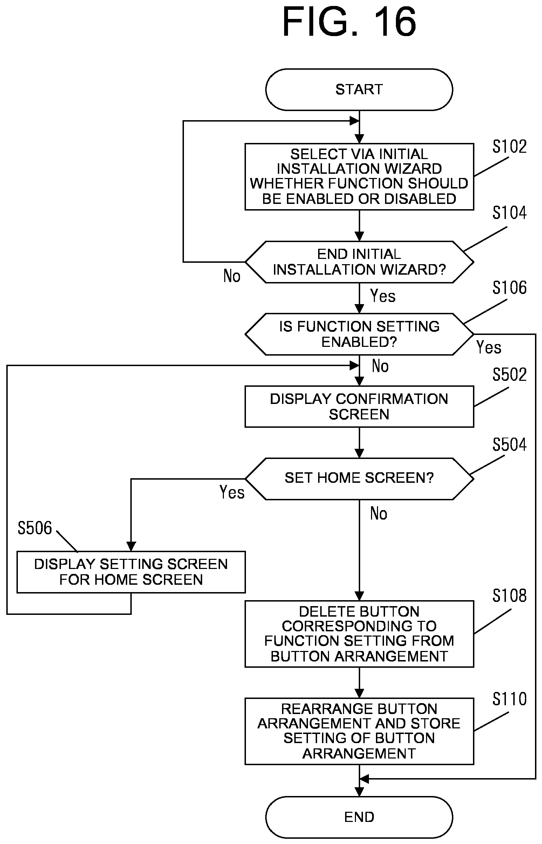

A flow of processing in the present embodiment will be described below with reference to FIG. 16. FIG. 16 is a figure in which FIG. 6 of the first embodiment is replaced, and S502 to S506 are executed between S106 and S108.

If it is determined by a controller 100 that a part of the function settings is set to "disabled", the controller 100 displays a confirmation screen on a display portion 140 (S106; No → S502). Here, the confirmation screen refers to a display screen for confirming with the user whether button arrangement of a home screen on which a function is set to disabled may be reflected.

Next, the controller 100 determines whether or not the user intends to set the home screen (S504). For example, when the user selects editing of the home screen on the confirmation screen, the controller 100 may determine that the user intends to set the home screen.

If it is determined that the user intends to set the home screen, the controller 100 displays a setting screen for the home screen on the display portion 140 (S504; Yes → S506). Meanwhile, if it is determined that the home screen will not be set, the controller 100 deletes buttons corresponding to the function setting that is set to be disabled from a button arrangement table (S504; No → S108).

### 5.2 Example of Operation

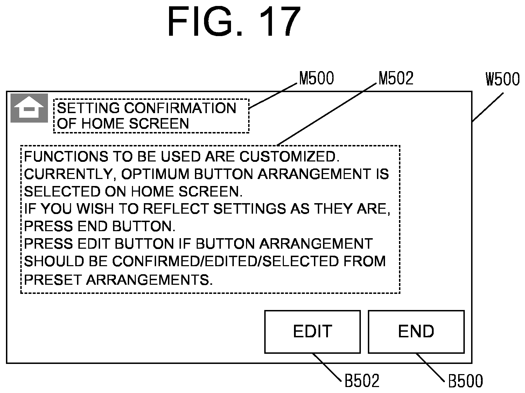

FIG. 17 is a diagram illustrating an operation of a display screen to be displayed on the display portion 140 of an image forming apparatus 10, as a confirmation screen displayed to the user, for example, when the user selects a display button B108 on a display screen W108 to end the initial installation wizard.

On a display screen W500 of FIG. 17, a message M500, which is "Setting Confirmation of Home Screen", a display button B500 for ending the display of the confirmation screen and storing button arrangement setting information, and a display button B502 for editing the home screen are displayed. On the display screen W500, a message M502, which is "Functions to be used are customized.... Press edit button if button arrangement should be confirmed/edited/selected from preset arrangements.", is further displayed.

When the user selects the display button B502, the controller 100 may display a setting screen for the home screen. The controller 100 may be able to set a button of the home screen by a user operation such as a drag-and-drop or a flick on the setting screen for the home screen. The controller 100 may further cause the user to select, on the setting screen for the home screen, a button arrangement from a plurality of pieces of default setting information such as a factory default state setting information and preset setting information.

In the present embodiment, a confirmation screen is displayed after display of the display screen W108, but the confirmation screen may be displayed before display of the display screen W108.

As described above, the present embodiment can accommodate the user's desire, such as making the setting of a home screen after skipping the setting of the home screen via the initial installation wizard and ending the initial installation wizard, or maintaining the home screen as it is in a factory default state, not by way of the function settings.

### 6. Modifications

The present disclosure is not limited to the above-described embodiments, and various modifications may be made.

That is, the technical scope of the present disclosure also includes such embodiments that can be obtained by combining technical measures that are modified as appropriate within a range not departing from the gist of the present disclosure.

Although the above-described embodiments are described separately for convenience of explanation, the embodiments may be combined and executed within a possible range. Moreover, the applicant has the intention to acquire rights to any of the techniques described in the specification through amendments, divisional applications, or the like.

In addition, a program operating in each device in the embodiments is a program that controls a CPU, or the like, (a program causing a computer to function) in such a way as to achieve the functions of the above-described embodiments. Moreover, information handled by these devices is temporarily stored in a temporary storage device (for example, a RAM) when being processed, and then stored in various storage devices, such as a ROM and an HDD, where the information is read, corrected, and written by the CPU as needed.

Here, a recording medium for storing the program may be any of a semiconductor medium (for example, a ROM and a non-volatile memory card), an optical recording medium/magneto-optical recording medium (for example, a digital versatile disc (DVD), a compact disc (CD), and a Blu-ray (registered trademark) disc (BD)), a magnetic recording medium (for example, a magnetic tape and a flexible disk), and the like.

In a case where the program is to be distributed in the market, the program can be stored in a portable recording medium and distributed, or can be transferred to a server computer connected via a network such as the Internet. In this case, a storage device in a server apparatus is also included in the present disclosure as a matter of course.

Furthermore, the data described above may not be stored in the device, but may be stored in an external device and retrieved as appropriate. For example, the data may be stored in a network attached storage (NAS) or on the cloud.

Note that the scope of the present disclosure is not limited to the configurations explicitly described in the specification but includes in its scope any combination of the techniques disclosed in the present specification. In the present disclosure, configurations sought to be patented are set forth in the appended claims, but it is not intended that the configurations be excluded from the technical scope due to their not being set forth in the claims.

Furthermore, in the present specification, descriptions including the terms "if/in a case where" and "when" are used to describe an example, and the configuration is not limited to the contents described. It is assumed that configurations to which the described cases or conditions do not apply are also disclosed to the extent that would be obvious to a person skilled in the art, and the applicant has the intention to acquire rights to such configurations.

Further, regarding the descriptions including the order of the processing steps and the data flow in the specification, the order is not limited to that described. For example, it is assumed that configurations obtained by deleting a part of the processing or switching the order are also disclosed, and the applicant has the intention to acquire rights to such configurations.

In addition, the functions described in the embodiments have been described as being executed by corresponding devices, but the functions may be implemented by a single device or even by using an external server.

Moreover, each functional block or various features of the device used in the above-described embodiments may be implemented or executed as an electric circuit, such as a single integrated circuit or a plurality of integrated circuits. The electric circuit designed to execute the functions described in the present specification may include a general-purpose processor, a digital signal processor (DSP), an application-specific integrated circuit (ASIC), a field programmable gate array (FPGA) or other programmable logic devices, a discrete gate or transistor logic, a discrete hardware component, or any combination thereof. The general-purpose processor may be a microprocessor, a conventional processor, a controller, a microcontroller, or a state machine. The above-described electric circuit may be configured by a digital circuit or an analog circuit. Moreover, when an integrated circuit technology that replaces the current integrated circuits emerges as a result of advances in semiconductor technology, one or more aspects of the present disclosure may also use the new integrated circuits based on such technology.

### REFERENCE SIGNS LIST

10 Image forming apparatus
100 Controller
110 Storage portion
112 Storage
114 ROM
116 RAM
140 Display portion
150 Operation receiver
160 Image former
165 Image reader
170 Communicator

## Claims

1. An information processing apparatus (10) comprising: a display portion (140) which arranges and displays, on a home screen, one or more buttons for executing a function; and one or more controllers (100),
wherein the one or more controllers (100)
display a setting screen for setting whether the function is to be enabled or disabled, on the display portion (140); and
rearrange and display, when the function is set to disabled on the setting screen, buttons other than the button corresponding to the function set to disabled, on the home screen.

2. The information processing apparatus (10) according to claim 1, further comprising a storage portion (110), wherein:
the storage portion (110) stores arrangement information indicating a state in which the one or more buttons are arranged on the home screen; and
the one or more controllers (100)
delete the button corresponding to the function set to disabled from the arrangement information when the button corresponding to the function set to disabled is included in the arrangement information, and
rearrange and display one or more buttons to be displayed on the home screen.

3. The information processing apparatus (10) according to claim 2, wherein:
the storage portion (110) stores an arrangement position of the button on the home screen and the button in the arrangement information; and
the one or more controllers (100) cause the button to be deleted when the button corresponding to the function set to disabled is included in the arrangement information, so that a button at the arrangement position is assigned as a blank space.

4. The information processing apparatus (10) according to claim 3, wherein the one or more controllers (100) move a button arranged after the blank space in such a way as to fill a position of the blank space.

5. The information processing apparatus (10) according to claim 2, wherein:
the storage portion (110) stores first default information, which represents an initial state of the arrangement information; and
the one or more controllers (100) rearrange and display, when the arrangement information and the first default information agree with each other, buttons other than the button corresponding to the function set to disabled, on the home screen.

6. The information processing apparatus (10) according to claim 5, wherein when positions of buttons other than the button corresponding to the function set to disabled in the arrangement information match with the positions in the first default information, the one or more controllers (100) rearrange and display the buttons other than the button corresponding to the function set to disabled, on the home screen.

7. The information processing apparatus (10) according to claim 5, wherein the first default setting information is set at a time of shipment from a factory.

8. The information processing apparatus (10) according to claim 5, wherein the one or more controllers (100)
execute setting of enablement and disablement of the function by a wizard form, thereby storing second default information, which is arrangement information regarding buttons to be arranged on the home screen, in the storage portion (110), and
rearrange and display, when the arrangement information and the second default information agree with each other, buttons other than the button corresponding to the function set to disabled, on the home screen.

9. The information processing apparatus (10) according to claim 8, wherein when the function is set to enabled on the setting screen, the one or more controllers (100) rearrange and display, if a button corresponding to the function set to enabled is included in the first default information, the button on the home screen regardless of whether the button is included in the second default information.

10. The information processing apparatus (10) according to claim 1, wherein the one or more controllers (100)
virtually arrange a button corresponding to the function set to disabled as a blank space on the home screen, and
rearrange and display, when the home screen is present, buttons arranged after the blank space by moving the buttons in such a way as to fill a position of the blank space.

11. The information processing apparatus (10) according to claim 10, wherein the one or more controllers (100) sequentially move the buttons arranged in such order that is after the blank space to be located before the blank space to exhibit a state in which the buttons do not exist after the blank space.

12. A display method comprising:
displaying of arranging and displaying, on a home screen, one or more buttons for executing a function; and
controlling of causing a setting screen for setting enablement and disablement of the function to be displayed in the displaying, and rearranging and displaying, when the function is set to disabled on the setting screen, buttons other than the button corresponding to the function set to disabled, on the home screen.
